# EUROPÄISCHE PATENTANMELDUNG

(11) **EP 3 179 637 A2**
(43) Veröffentlichungstag der Anmeldung: **14.06.2017**
(21) Anmeldenummer: 16198308.5
(22) Anmeldetag: 11.11.2016
(51) Int. Cl.: H04B 5/00, G01B 7/30, B60R 16/027, G01D 5/241

(54) **VORRICHTUNG ZUR KONTAKTLOSEN ÜBERTRAGUNG VON DATEN UND ZUR ERMITTLUNG EINER WINKELÄNDERUNG ZWISCHEN ZWEI SICH RELATIV ZUEINANDER BEWEGENDEN GEGENSTÄNDEN**

(30) Priorität: 09.12.2015 DE 102015121423
(71) Anmelder: SICK AG, 79183 Waldkirch/Breisgau (DE)
(72) Erfinder: SCHMITZ, Stephan, 79108 Freiburg (DE); KUFNER, Martin, 79215 Elzach (DE)
(74) Vertreter: Manitz Finsterwald Patentanwälte PartmbB

(57) **Zusammenfassung**

Die Erfindung betrifft eine Vorrichtung zur kontaktlosen Übertragung von Daten und zur Ermittlung einer Winkeländerung zwischen zwei sich um eine gemeinsame Rotationsachse relativ zueinander bewegenden Gegenständen, wobei an dem ersten Gegenstand ein bevorzugt scheiben- oder ringscheibenförmiger erster Elektrodenträger vorgesehen ist, der eine erste Elektrode umfasst, und an dem zweiten Gegenstand ein bevorzugt scheiben- oder ringscheibenförmiger zweiter Elektrodenträger vorgesehen ist, der eine zweite Elektrode umfasst, wobei sich der erste und der zweite Elektrodenträger bezüglich der Rotationsachse axial beabstandet gegenüberstehen und die erste und die zweite Elektrode derart angeordnet sind, dass eine Datenübertragung durch elektrische Kopplung zwischen der ersten und der zweiten Elektrode möglich ist, wobei die Elektrodenträger derart ausgebildet sind, dass sich die Stärke der elektrischen Kopplung entlang der umfangsmäßigen Erstreckung der ersten und der zweiten Elektrode verändert, wobei die erste Elektrode und die zweite Elektrode eine elektrische Kapazität bilden. Es ist eine Steuereinheit vorgesehen, die ausgebildet ist, ein Signal von der ersten Elektrode an die zweite Elektrode zu übertragen, welches bevorzugt Nutzdaten enthält. Weiterhin ist eine Auswerteeinheit vorgesehen, die bevorzugt ausgebildet ist, die Nutzdaten zu empfangen. Dabei ist die Steuereinheit und/oder die Auswerteeinheit ausgebildet, eine Größe der elektrischen Kapazität zu bestimmen, um eine Winkeländerung zwischen dem ersten und dem zweiten Gegenstand zu ermitteln.

## Beschreibung

Die vorliegende Erfindung betrifft eine Vorrichtung zur kontaktlosen Übertragung von Daten und zur Ermittlung einer Winkeländerung zwischen zwei sich um eine gemeinsame Rotationsachse relativ zueinander bewegenden Gegenständen, wobei an dem ersten Gegenstand ein bevorzugt scheiben- oder ringscheibenförmiger erster Elektrodenträger vorgesehen ist, der eine erste Elektrode umfasst, und an dem zweiten Gegenstand ein bevorzugt scheiben- oder ringscheibenförmiger zweiter Elektrodenträger vorgesehen ist, der eine zweite Elektrode umfasst. Dabei stehen sich der erste und der zweite Elektrodenträger bezüglich der Rotationsachse axial beabstandet gegenüber und die erste und die zweite Elektrode sind derart angeordnet, dass eine Datenübertragung durch elektrische Kopplung zwischen der ersten und der zweiten Elektrode möglich ist.

Bei sich relativ zueinander drehenden Gegenständen ist es oftmals notwendig, dass Daten zwischen den zwei zueinander bewegbaren Gegenständen übertragen werden. So können Eingaben an einem Lenkrad, wie beispielsweise das Drücken der Hupe oder sonstige Eingaben zur Änderung von Fahrzeugfunktionen, zwischen dem drehbaren Lenkrad und einer Bordelektronik des Kraftfahrzeugs übermittelt werden.

Eine weitere Anwendung findet sich z.B. bei entsprechenden Ausgestaltungen von Laserscannern zur Überwachung einer Umgebung. Datensignale werden hier beispielsweise zwischen einem sich drehenden Sensorkopf und einer feststehenden Auswerte- und Versorgungseinheit ausgetauscht.

Oftmals kann es erwünscht sein, dass neben der Datenübertragung eine Ermittlung der relativen Drehposition des ersten Gegenstands zu dem zweiten Gegenstand möglich ist. Eine solche Ermittlung der Drehposition erfolgt üblicherweise mittels eines Encoders, der beispielsweise auf einem optischen oder magnetischen Prinzip basiert. Encoder benötigen allerdings zusätzliche Komponenten und erhöhen damit die Komplexität und den Herstellungsaufwand für eine solche Vorrichtung.

Es ist die der Erfindung zugrundliegende Aufgabe, eine Vorrichtung anzugeben, die die kontaktlose Übertragung von Daten zwischen zwei sich relativ zueinander um eine Rotationsachse bewegenden Gegenständen gestattet und zugleich eine wenig aufwändige Ermittlung einer Winkeländerung zwischen den zwei Gegenständen ermöglicht.

Diese Aufgabe wird mit einer Vorrichtung zur kontaktlosen Übertragung von Daten zur Ermittlung einer Winkeländerung mit den Merkmalen des Anspruchs 1 gelöst. Unteransprüche sind auf bevorzugte Ausgestaltungen gerichtet. Ein Verfahren zur kontaktlosen Übertragung von Daten und zur Ermittlung einer Winkeländerung ist in Anspruch 12 angegeben. Ein Laserscanner mit einer erfindungsgemäßen Vorrichtung zur Übertragung von Daten und zur Ermittlung einer Winkeländerung ist Gegenstand des Anspruchs 13.

Die erfindungsgemäße Vorrichtung zeichnet sich unter anderem dadurch aus, dass die Elektrodenträger derart ausgebildet sind, dass sich die Stärke der elektrischen Kopplung entlang der umfangsmäßigen Erstreckung der ersten und der zweiten Elektrode verändert, wobei die erste Elektrode und die zweite Elektrode eine elektrische Kapazität bilden. Zudem ist eine Steuereinheit vorgesehen, die ausgebildet ist, ein Signal von der ersten Elektrode an die zweite Elektrode zu übertragen, welches bevorzugt Nutzdaten enthält. Weiterhin ist eine Auswerteeinheit vorgesehen, die bevorzugt ausgebildet ist, die Nutzdaten zu empfangen. Dabei ist die Steuereinheit und/oder die Auswerteeinheit ausgebildet, die Größe der elektrischen Kapazität oder eine eindeutig damit zusammenhängende Größe zu bestimmen, um eine Winkeländerung zwischen dem ersten und zweiten Gegenstand zu ermitteln.

Der Begriff der "umfangsmäßigen Erstreckung" der Elektroden ist hier als Erstreckung entlang einer Linie um die Achse der relativen Drehung der beiden Gegenstände zu verstehen.

Der Erfindung liegt die Erkenntnis zugrunde, dass sich mit der Drehung der Gegenstände zueinander die elektrische Kopplung verändert und sich hierdurch zugleich auch die Größe der von der ersten und der zweiten Elektrode gebildeten elektrischen Kapazität ändern kann. Anhand einer Messung der Größe der Kapazität kann somit auf eine Winkeländerung rückgeschlossen werden, was eine einfache aber trotzdem genaue Ermittlung einer relativen Winkelposition des ersten Gegenstands bezüglich des zweiten Gegenstands gestattet.

Insofern wird bewusst in Kauf genommen, dass sich die Kopplungsstärke in Umfangsrichtung ändert, da hierdurch die oben beschriebene Winkelerfassung ermöglicht wird.

Mit der erfindungsgemäßen Vorrichtung kann es zugleich auch möglich sein, Nutzdaten zwischen der ersten und der zweiten Elektrode zu übertragen, wobei es sich bei den Nutzdaten beispielsweise um Steuerbefehle, Mess- oder Sensordaten und dergleichen handeln kann. Von besonderem Vorteil ist dabei, dass für die Ermittlung der Winkeländerung auf die ohnehin zur Datenübertragung benötigten Elektrodenträger zurückgegriffen werden kann. Auf diese Weise können zusätzliche Komponenten zur Winkelmessung eingespart werden, wodurch die erfindungsgemäße Vorrichtung besonders einfach und damit wirtschaftlich herstellbar sein kann.

Alternativ können für die Datenübertragung und die Winkelmessung jeweils separate Elektrodenpaare vorgesehen sein.

Der Begriff der "elektrischen Kopplung" zwischen der ersten und der zweiten Elektrode ist als kontaktlose kapazitive Kopplung zu verstehen.

Eine bevorzugte Ausgestaltung der Erfindung sieht vor, dass der erste Elektrodenträger in Umfangsrichtung abwechselnde Abschnitte mit verbreiterter und anschließend verjüngter erster Elektrode aufweist und der zweite Elektrodenträger in Umfangsrichtung abwechselnde Abschnitte mit verbreiterter und anschließend verjüngter zweiter Elektrode aufweist. Bevorzugt können die Elektroden als flächige Elektroden auf den Elektrodenträgern aufgebracht sein. Die Begriffe "verbreitert" und "verjüngt" können sich jeweils auf die in der axialen Richtung sichtbare Fläche der Elektroden beziehen. Bei den verbreiterten und verjüngten Bereichen handelt es sich somit um radial verbreiterte bzw. radial verjüngte Elektrodenbereiche. Die verbreiterten und verjüngten Abschnitte der Elektroden führen bei einer Drehung der Gegenstände zueinander zu einer sich periodisch vergrößernden und danach verkleinernden Kapazität. Durch die Erfassung der Größe der Kapazität kann somit eine Winkeländerung der Gegenstände ermittelt werden.

Neben den Elektroden kann auch der Elektrodenträger selbst ebenfalls in Umfangsrichtung abwechselnd verbreitert und anschließend verjüngt ausgebildet sein. Die Elektroden können die Elektrodenträger also jeweils vollständig bedecken.

Beispielsweise können die Elektroden (und damit auch die Elektrodenträger) eine ebene kreisringförmige Struktur umfassen, die in periodischen Abständen nach außen oder innen ragende rechteckige Zähne umfasst, wobei die Zähne dazu dienen, eine unterschiedliche Kopplungsstärke und damit bei einer Drehung eine sich ändernde Größe der Kapazität zu erreichen.

Alternativ kann eine Kopplungsstärkenmodulation, d.h. eine unterschiedlich starke kapazitive Kopplung, auch durch das Aufbringen verschiedener Dielektrika, das Vorsehen von zusätzlichen Abschirmungen, die Verwendung einer dreidimensionalen Form mit Abschnitten mit geringerem Abstand zwischen den Elektroden und/oder durch die Benutzung einer Polygonform für die Elektroden erreicht werden.

Im Folgenden wird die Erfindung und bevorzugte Ausführungsformen davon an Hand des Beispiels der Kopplungsstärkenmodulation durch das Vorhandensein von in Umfangsrichtung abwechselnden verbreiterten und anschließend verjüngten Elektrodenabschnitten erläutert.

Besonders bevorzugt weisen die Abschnitte mit verbreiterter Elektrode und mit verjüngter Elektrode in Umfangsrichtung der Elektrodenträger jeweils eine gleiche Länge auf. Hierdurch kann die Kopplungsstärke in Umfangsrichtung gesehen periodisch schwanken, wodurch die Größe der Kapazität bei einer Drehung der Gegenstände gegeneinander eine etwa sinusförmige Amplitudenmodulation erhalten kann.

Bei der Verwendung des Begriffs "Länge" ist jeweils die Länge in Umfangsrichtung gemeint, sofern dies nicht anders angegeben ist.

Gemäß einer vorteilhaften Ausführungsform weisen der erste und/oder der zweite Elektrodenträger einen Nullreferenzabschnitt auf, der eine verbreiterte oder eine verjüngte Elektrode aufweist und dessen Länge in Umfangsrichtung größer als die Länge eines Abschnitts mit verbreiterter Elektrode und die Länge eines Abschnitts mit verjüngter Elektrode ist. Insbesondere ist die Länge des Nullreferenzabschnitts in Umfangsrichtung gesehen ein ganzzahliges Vielfaches der Länge der Abschnitte mit verbreiterter und/oder verjüngter Elektrode.

Generell kann der Nullreferenzabschnitt durch einen Abschnitt mit einem Maximum oder einem Minimum der elektrischen Kopplung gebildet sein.

Durch den Nullreferenzabschnitt kann beispielsweise ein bezüglich der abwechselnden Abschnitte "großer" bzw. "langer" Bereich mit einer starken elektrischen Kopplung entstehen, wodurch die Größe der Kapazität bei der größten Annäherung der Nullreferenzabschnitte aneinander beispielsweise ein absolutes Maximum erreichen kann. Die vorstehend erläuterte etwa sinusförmige Amplitudenmodulation kann somit bei der Verwendung zweier Nullreferenzabschnitte (d.h. einem Nullreferenzabschnitt auf jeder Elektrode) von einer zusätzlichen Amplitudenmodulation überlagert werden, mittels welcher ein Nullpunkt definiert werden kann. Aufgrund des Nullpunkts kann es möglich sein, mit der Vorrichtung nicht nur eine relative Winkelposition sondern zusätzlich auch eine absolute Winkelposition der Gegenstände zueinander zu ermitteln. Bevorzugt kann die Auswerteeinheit mehrere Umdrehungen der Gegenstände verarbeiten, um den Nullpunkt exakter zu bestimmen.

Gemäß einer besonders bevorzugten Ausgestaltung ändert sich die Breite der Abschnitte mit verbreiterter Elektrode in Umfangsrichtung zwischen einem Maximum und einem Minimum, wobei sich das Maximum und das Minimum bevorzugt bezüglich der Rotationsachse gegenüberliegen. Die verbreiterten Bereiche können also unterschiedliche Breiten aufweisen, wobei alle verbreiterten Bereiche breiter sind als sämtliche verjüngten Bereiche.

Bevorzugt ändert sich die Breite der Abschnitte mit verbreiterter Elektrode in Umfangsrichtung kontinuierlich zwischen dem Maximum und dem Minimum. Die erste und die zweite Elektrode können in einer Draufsicht folglich eine leicht elliptische Form haben, sofern sich die verbreiterten Bereiche von der Rotationsachse wegerstrecken.

Gemäß einer weiteren vorteilhaften Ausführungsform ist die elektrische Kapazität Bestandteil eines Schwingkreises. Mittels des Schwingkreises kann ein Zusammenhang zwischen der momentanen Schwing-/Resonanzfrequenz und der Größe der Kapazität hergestellt werden, sofern die übrigen Komponenten des Schwingkreises (bzw. deren Größen) bekannt sind. Aus der Schwing-/Resonanzfrequenz kann auf diese Weise die Größe der elektrischen Kapazität ermittelt werden.

Bevorzugt umfasst der Schwingkreis einen spannungsgesteuerten Oszillator (VCO - Voltage Controlled Oscillator). Ein solcher spannungsgesteuerter Oszillator kann eine Grundeinstellung bzw. einen initialen Abgleich der Schwingfrequenz des Schwingkreises erleichtern.

Weiter bevorzugt ist der Schwingkreis mit einer Phasenregelschleife (PLL - Phase Locked Loop) gekoppelt, die eine Steuerspannung an den spannungsgesteuerten Oszillator ausgibt, wobei die Steuereinheit und/oder die Auswerteeinheit ausgebildet ist, anhand der Steuerspannung die Größe der elektrischen Kapazität zu bestimmen. Die Phasenregelschleife kann mit einem Ausgang des spannungsgesteuerten Oszillators gekoppelt sein, so dass eine Änderung der Schwingfrequenz des Oszillators zu einer Änderung der Steuerspannung führt. Aufgrund der Steuerspannung kann die Schwingfrequenz des spannungsgesteuerten Oszillators verändert werden, wodurch die Phasenregelschleife zu einer im Wesentlichen konstanten Schwingfrequenz des spannungsgesteuerten Oszillators beiträgt.

Anhand der Steuerspannung kann dann auf die Änderung der Schwingfrequenz des Oszillators und damit auf die Größe der elektrischen Kapazität rückgeschlossen werden. Der spannungsgesteuerte Oszillator kann beispielsweise eine Grundfrequenz von 100 MHz aufweisen.

Weiter bevorzugt ist die Phasenregelschleife mit einer Referenzfrequenzquelle gekoppelt, deren Frequenz bevorzugt um den Faktor 100 kleiner ist als eine (Grund-)Frequenz des Schwingkreises. Bei der Referenzfrequenzquelle kann es sich beispielsweise um einen Quarzoszillator handeln, der bevorzugt eine Schwingfrequenz von 1 MHz aufweist. Alternativ kann die Referenzfrequenzquelle auch mit einer Frequenz schwingen, die zumindest um den Faktor 10 oder zumindest um den Faktor 50 kleiner ist als eine (Grund-)Frequenz des Schwingkreises. Bei der Grundfrequenz des Schwingkreises handelt es sich um die Nominalfrequenz, d.h. um eine rechnerische Schwingfrequenz, mit der der Schwingkreis schwingen sollte.

Die Schwingfrequenz des Schwingkreises kann mittels eines Frequenzteilers, beispielsweise eines Teilers mit einem Verhältnis von 1:100, der Phasenregelschleife zugeleitet werden. Ein solcher Teiler kann die Anforderungen an die Phasenregelschleife und die Referenzfrequenzquelle reduzieren.

Für den Schwingkreis kann die erste oder die zweite Elektrode mit einem Masse-/Erdpotential gekoppelt sein.

Gemäß einer weiteren vorteilhaften Ausführungsform ist koaxial und drehfest zu dem ersten Elektrodenträger eine erste Spule vorgesehen und ist koaxial und drehfest zu dem zweiten Elektrodenträger eine zweite Spule vorgesehen, die der ersten Spule derart bezüglich der Rotationsachse axial beabstandet gegenüber steht, dass eine Energieübertragung durch induktive Kopplung zwischen den zwei Spulen möglich ist. Insbesondere ist die Vorrichtung zur Energieübertragung zwischen dem ersten und dem zweiten Gegenstand ausgebildet. Neben der Übertragung von Daten ist somit auch die Übertragung von Energie zwischen den Gegenständen möglich, wodurch beispielsweise die für den Betrieb eines Sensorkopfes eines Laserscanners notwendige Energie mittels der Vorrichtung übertragbar ist.

Bevorzugt ist in einem radialen Bereich zwischen der ersten Spule und der ersten Elektrode und/oder zwischen der zweiten Spule und der zweiten Elektrode jeweils koaxial zwischen Spule und Elektrode eine Anordnung aus leitfähigem Material zur elektrischen Abschirmung vorgesehen. Es ist damit auf effektive Weise möglich, trotz einer kompakten Anordnung der Vorrichtung, Störungen der Datenübertragung über die Elektrode durch die benachbart angeordnete induktive Energieübertragung mittels der Spulen wirksam einzuschränken. Trotzdem ist eine kleine Bauform möglich, weil die induktive Energieübertragung und die elektrische Datenübertragung räumlich nicht weit auseinanderliegen müssen, um die ansonsten stattfindende elektromagnetische Störung zu verhindern.

Eine einfache und leicht handzuhabende Ausgestaltung sieht vor, dass die Spule bzw. die Spulen konzentrisch zu der Drehachse der Relativbewegung der Gegenstände sind.

Grundsätzlich ist es möglich, dass die Spulen selbsttragende Strukturen sind. Besonders vorteilhaft ist es jedoch, wenn der erste Gegenstand einen ersten scheiben- oder ringscheibenförmigen Spulenträger umfasst, der die erste Spule trägt, und der zweite Gegenstand einen zweiten scheiben- oder ringscheibenförmigen Spulenträger umfasst, der die zweite Spule trägt. Derartige scheiben- oder ringscheibenförmige Spulenträger sind einfach herzustellen und können z.B. durch lithographische Prozesse prozessiert werden, um die Spulen darauf aufzubringen.

Außerdem sind bei einer solchen Ausgestaltung nicht nur die Elektrodenträger scheiben- oder ringscheibenförmig ausgestaltet und stehen sich zur Datenübertragung axial beabstandet gegenüber, sondern auch die Spulen auf dem scheiben- oder ringscheibenförmig ausgestalteten Spulenträger stehen sich axial beabstandet gegenüber, um die induktive Kopplung zur Energieübertragung zu ermöglichen. Auf diese Weise ist ein sehr kompakter und einfacher Aufbau gewährleistet. Besonders einfach und vorteilhaft ist es dabei, wenn die Spulenträger direkt als Leiterkarten ausgestaltet sind, auf denen die jeweiligen Spulenwindungen zur Energieübertragung aufgebracht sind. Ebenso können die Elektrodenträger Leiterkarten umfassen, auf die die Elektroden zur Datenübertragung aufgebracht sind. Die metallischen Spulenwindungen zur Energieübertragung bzw. die Elektroden zur Datenübertragung lassen sich auf Leiterkarten sehr einfach durch an sich bekannte lithographische Prozesse (z.B. Aufdampfen oder Ätzen) herstellen.

Auf diese Weise ist die Geometrie der Spulenwindungen bzw. der Elektroden auf einfache Weise festlegbar und die Leiterkarten können selbst als Träger für die Spulenwindungen bzw. die Elektroden dienen.

Besonders einfach und in der Herstellung kostengünstig ist es, wenn am ersten Gegenstand der erste Spulenträger und der erste Elektrodenträger einstückig vorgesehen sind (also durch ein Teil gebildet werden kann) und/oder am zweiten Gegenstand der zweite Spulenträger und der zweite Elektrodenträger einstückig sind. Auf diese Weise muss jeweils nur eine Trägerstruktur, z.B. eine Leiterkarte pro Gegenstand, vorgesehen sein. Auf dieser Leiterkarte können dann jeweils die Spule zur Energieübertragung und die Elektrode zur Datenübertragung vorgesehen sein und bei der Herstellung gleichzeitig prozessiert werden.

Bei Ausgestaltungen, bei der die Spulenträger bzw. die Elektrodenträger als Leiterkarten vorgesehen sind, ist es zudem von besonderem Vorteil, dass es auf platzsparende Weise möglich ist, weitere - insbesondere elektronische - Komponenten und Verbindungsleitungen vorzusehen.

Bei erfindungsgemäßen Ausgestaltungen, bei der der erste Gegenstand einen ersten scheiben- oder ringscheibenförmigen Spulenträger umfasst, der die erste Spule trägt, und der zweite Gegenstand einen zweiten scheiben- oder ringscheibenförmigen Spulenträger umfasst, der die zweite Spule trägt, sind die Spulen vorteilhafterweise flächig ausgestaltet. Das heißt, sie umfassen Spulenwindungen, die auf einer Fläche des jeweiligen scheiben- oder ringscheibenförmigen Spulenträgers nebeneinander angeordnet sind. Grundsätzlich ist es möglich, dass auf der zweiten Fläche des jeweiligen Spulenträgers jeweils eine weitere flächige Spule vorgesehen ist, die die induktive Kopplung z.B. über eine Ferritstruktur verstärkt.

Bevorzugt ist es jedoch, wenn sich die Spulenwindungen der ersten Spule (am ersten Gegenstand) und die Spulenwindungen der zweiten Spule (am zweiten Gegenstand) auf den gegenüberliegenden Seiten der beiden Spulenträger gegenüber stehen, wie es auch weiter unten unter Bezug auf die in den Figuren gezeigte Ausgestaltung beschrieben ist.

Eine einfache Realisierung der Abschirmung zwischen den energieübertragenden Spulen und den datenübertragenden Elektroden bei einer Ausführungsform mit Leiterkarten als Trägerstrukturen sieht vor, dass zwischen den Spulenwindungen und dem elektrischen Leiter Bohrungen in der jeweiligen Leiterkarte vorgesehen sind, in denen sich leitfähiges Material befindet. Dazu kann insbesondere vorgesehen sein, dass die Innenumfänge der Bohrungen in den Leiterkarten mit metallischem Material beschichtet sind, um eine Abschirmung zu bewirken, die auf einfache Weise realisiert werden kann, ohne die Trägerstruktur zu sehr zu schwächen.

Besonders vorteilhaft ist es, wenn die Vorrichtung eine erste Gehäuseschale aus leitfähigem Material und/oder eine zweite Gehäuseschale aus leitfähigem Material aufweist, wobei die erste Gehäuseschale drehfest mit dem ersten Gegenstand und die zweite Gehäuseschale drehfest mit dem zweiten Gegenstand ist. Die Gehäuseschalen aus leitfähigem Material dienen zur elektrischen Abschirmung des Systems nach außen und verhindern auf wirksame Weise Störungen durch externe Einflüsse.

Außerdem bieten derartig angeordnete und ausgestaltete Gehäuseschalen eine Verbindung zu einer virtuellen Masse, indem sie eine kapazitive Kopplung zwischen der realen Masse und der virtuellen Masse bewirken.

Besonders vorteilhaft ist es, wenn die erste Gehäuseschale dabei elektrisch mit der elektrischen Anordnung zwischen den Spulenwindungen der ersten Spule und dem ersten elektrischen Leiter verbunden ist und die zweite Gehäuseschale elektrisch mit der elektrischen Anordnung aus leitfähigem Material zur elektrischen Abschirmung zwischen den Spulenwindungen der zweiten Spule und dem zweiten elektrischen Leiter verbunden ist.

Auf diese Weise sind die Abschirmungsanordnungen zwischen den jeweiligen Spulenwindungen und Elektroden elektrisch mit jeweils einer Gehäuseschale verbunden, so dass eine wirksame Abschirmung der Datenübertragung gegenüber jeglichen äußeren Einflüssen und insbesondere auch gegenüber den Einflüssen der zur Energieübertragung verwendeten Spulen vorgesehen ist. Nur diejenige Seite des Elektrodenträgers, die dem Elektrodenträger auf dem anderen sich relativ drehenden Gegenstand direkt gegenübersteht, ist nicht von der Abschirmung umgeben.

Die Verbindung kann zum Beispiel durch eine leitfähige ringförmige Struktur, z.B. leitfähigem Schaumstoff gebildet sein, der koaxial zur Drehachse zwischen Spule und Elektrode angeordnet ist.

Besonders wirksam ist die Abschirmung durch die Gehäuseschalen, wenn die beide Gehäuseschalen an ihrem radial äußeren Bereich jeweils einen abgewinkelten Bereich umfassen, wobei die abgewinkelten Bereiche der beiden Gehäuseschalen radial beabstandet zueinander nebeneinander stehen. Je größer der überlappende Bereich der Abschirmung (insbesondere der Gehäuseschalen) ist und desto geringer der Abstand der überlappenden Bereiche ist, umso besser ist die abschirmende Wirkung.

Weiterer Gegenstand der Erfindung ist ein Verfahren zur kontaktlosen Übertragung von Daten und zur Ermittlung einer Winkeländerung zwischen zwei sich um eine gemeinsame Rotationsachse relativ zueinander bewegenden Gegenständen, wobei an dem ersten Gegenstand ein bevorzugt scheiben- oder ringscheibenförmiger erster Elektrodenträger vorgesehen ist, der eine erste Elektrode umfasst, und an dem zweiten Gegenstand ein bevorzugt scheiben- oder ringscheibenförmiger zweiter Elektrodenträger vorgesehen ist, der eine zweite Elektrode umfasst, wobei sich der erste und der zweite Elektrodenträger bezüglich der Rotationsachse axial beabstandet gegenüberstehen und die erste und die zweite Elektrode derart angeordnet sind, dass eine Datenübertragung durch elektrische Kopplung zwischen der ersten und der zweiten Elektrode möglich ist. Dabei sind die Elektrodenträger derart ausgebildet, dass die Stärke der elektrischen Kopplung entlang der Erstreckung der ersten und der zweiten Elektrode schwankt, wobei die erste Elektrode und die zweite Elektrode eine elektrische Kapazität bilden. Gemäß dem Verfahren wird von der ersten Elektrode an die zweite Elektrode ein Signal übertragen, welches bevorzugt Nutzdaten enthält, und wird die Größe der elektrischen Kapazität ausgewertet, um eine Winkeländerung zwischen dem ersten und dem zweiten Gegenstand zu ermitteln.

Ferner betrifft die Erfindung einen Laserscanner mit einer Vorrichtung zur kontaktlosen Übertragung von Daten und zur Ermittlung einer Winkeländerung der voranstehend erläuterten Art, wobei der Laserscanner einen, relativ um eine Rotationsachse drehbaren, den ersten Gegenstand bildenden Sensorkopf und eine den zweiten Gegenstand bildende Versorgungseinheit umfasst.

Alternativ kann der Sensorkopf auch den zweiten Gegenstand und die Versorgungseinheit den ersten Gegenstand bilden.

Die zu der erfindungsgemäßen Vorrichtung getroffenen Aussagen, insbesondere hinsichtlich Vorteilen und bevorzugten Ausführungsformen, gelten für das erfindungsgemäße Verfahren und den erfindungsgemäßen Laserscanner entsprechend.

Nachfolgend wird die Erfindung rein beispielhaft unter Bezugnahme auf die Zeichnungen beschrieben. Es zeigen:
- Fig.1: eine erfindungsgemäße Vorrichtung in schematischer Darstellung im seitlichen Schnitt;
- Fig. 2: eine erste und eine zweite Elektrode in perspektivischer Ansicht;
- Fig. 3: die Größe einer von der ersten und zweiten Elektrode gebildeten Kapazität über eine vollständige Drehung der Gegenstände zueinander; und
- Fig. 4: eine Schaltungsanordnung zur Ermittlung der Größe der elektrischen Kapazität.

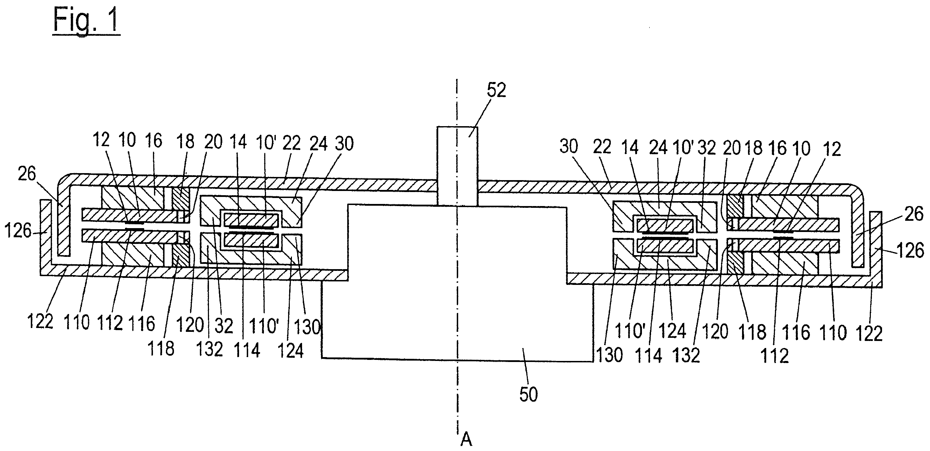

Fig. 1 zeigt eine Ausgestaltung einer erfindungsgemäßen Vorrichtung im seitlichen Schnitt in schematischer Darstellung. Im seitlichen Schnitt sieht man zwei sich gegenüberstehende Leiterkarten 10, 110, die gegeneinander um die Achse A relativ zueinander beweglich sind.

Auf dem radial inneren Bereich 10' der Leiterkarte 10 befindet sich auf derjenigen Seite, die der Leiterkarte 110 gegenübersteht, eine Spule 14 mit Spulenwindungen, die im Wesentlichen konzentrisch zur Drehachse A der Relativbewegung sind. Diese Spulenwindungen sind im Schnitt der Fig. 1 schematisch als nur ein schwarzer Balken an der Unterseite des Leiterkartenabschnitts 10' gezeigt. Die Spulenwindungen werden auf der jeweiligen Leiterkarte durch aufgedampfte oder geätzte Leiterbahnen gebildet. Für die Spule 14 auf der Leiterkarte 10 und die sie bildenden Spulenwindungen wird der einfachen Darstellung halber im vorliegenden Text dieselbe Bezugsziffer 14 verwendet.

Im äußeren Bereich der Leiterkarte 10 befindet sich auf derjenigen Seite, die der Leiterkarte 110 gegenübersteht, eine erste Elektrode 12, die konzentrisch zur Drehachse A als Leiterbahn ringförmig angeordnet ist.

Nicht gezeigt ist, dass derjenige Leiterkartenbereich der Leiterkarte 10, auf dem die erste Elektrode 12 aufgebracht ist, und der Leiterkartenbereich 10', auf dem die Spule 14 aufgebracht ist, durch entsprechende radiale Stege miteinander verbunden sind. Bei der beschriebenen Ausführungsform bilden also der Spulenträgerbereich 10' und der Elektrodenträger mit der ersten Elektrode 12 eine einstückige Leiterkarte 10.

Die Leiterkarte 10 ist über einen oder mehrere isolierende Abstandshalter 16 (Fig. 1) mit einer metallischen Gehäuseschale 22 verbunden, die zum Beispiel ein Tiefziehblech umfassen kann. Bei der beschriebenen Ausführungsform ist diese Gehäuseschale 22 mit der Antriebswelle 52 eines Antriebsmotors 50 drehfest verbunden, so dass sich die Gehäuseschale 22 zusammen mit der Leiterkarte 10 und den darauf aufgebrachten Strukturen dreht.

Die Antriebswelle 52 ist drehfest mit einem (nicht gezeigten) ersten Gegenstand gekoppelt, sodass auch die Gehäuseschale 22 und die Leiterkarte 10 drehfest mit dem ersten Gegenstand sind. In entsprechender Weise ist ein Gehäuse des Antriebsmotors 50 drehfest mit einem (ebenfalls nicht gezeigten) zweiten Gegenstand verbunden. Der zweite Gegenstand ist folglich drehfest mit der Leiterkarte 110 gekoppelt.

In bzw. an der Leiterkarte 10 ist - bezüglich der ersten Elektrode 12 radial nach innen versetzt - eine Abschirmungsstruktur 18, 20 vorgesehen, die bei der beschriebenen Ausführungsform wie folgt ausgestaltet ist:

In der Leiterkarte 10 befinden sich radial gegenüber der Elektrode 12 nach innen versetzt auf einem Ring angeordnete Bohrungen 20, deren Inneres metallisch ausgekleidet ist, z.B. durch einen entsprechenden Aufdampfprozess. Diese metallisch ausgekleideten Bohrungen 20 stehen über ein metallisches Material 18 mit der Gehäuseschale 22 in elektrischer Verbindung. Bei dem metallischen Material 18 kann es sich z.B. um leitenden Schaumstoff handeln.

Wie es in Fig. 1 sichtbar ist, weist die Gehäuseschale 22 an der radial äußeren Seite der Leiterkarte 10 einen abgewinkelten Bereich 26 auf. Insgesamt ergibt sich auf diese Weise eine Abschirmungsstruktur, die aus den metallisch ausgekleideten Bohrungen 20, der ringförmigen Materialstruktur 18, der planaren Fläche der Gehäuseschale 22 und dem abgewinkelten Bereich 26 der Gehäuseschale 22 gebildet wird.

An dem Antriebsmotor 50 ist bei der beschriebenen Ausgestaltung eine Gehäuseschale 122 fest montiert. Diese Gehäuseschale 122 trägt eine Struktur, die der beschriebenen Struktur, die in der Gehäuseschale 22 vorgesehen ist, entspricht und ihr gegenübersteht. So ist hier eine zweite Elektrode 112 auf einem Leiterkartenbereich einer Leiterkarte 110 vorgesehen, der über einen oder mehrere isolierende Abstandshalter 116 mit der Gehäuseschale 122 verbunden ist. Eine ringförmige Struktur aus metallischem Schaumstoff 118 verbindet die Gehäuseschale 122 mit Bohrungen 120, die in der Leiterkarte 110 ringförmig angeordnet sind und metallisch ausgekleidet sind. Am radial äußersten Bereich der Gehäuseschale 122 weist diese einen abgewinkelten Bereich 126 auf.

Es ist erkennbar, dass die sich gegenüberstehenden Elektroden 12 bzw. 112 auf den sich gegenüberstehenden Leiterkarten 10 bzw. 110 effektiv durch die Abschirmungsstruktur abgeschirmt sind, die durch die Gehäuseschalen 22, 122, deren abgewinkelten Bereichen 26, 126, den Strukturen aus metallischem Schaumstoff 18, 118 und den metallisch ausgekleideten ringförmig angeordneten Bohrungen 20, 120 gebildet wird. Besonders effektiv ist die Abschirmung nach außen, wenn sich wie bei der gezeigten Ausführungsform die abgewinkelten Bereiche 26, 126 der beiden Gehäuseschalen 22, 122 überlappen.

Die Gehäuseschalen 22, 122 und insbesondere die abgewinkelten Bereiche 26, 126 bilden außerdem noch eine wirksame kapazitive Kopplung der Masse zwischen den sich relativ zueinander drehenden Elementen.

Radial innerhalb der Struktur mit der ersten Elektrode 12 sind die bereits beschriebenen lithographisch hergestellten Spulenwindungen 14 auf dem Leiterkartenbereich 10' vorgesehen. Diesen Spulenwindungen 14 stehen auf der in Fig. 1 unteren Leiterkarte 110 in deren Bereich 110' Spulenwindungen 114 gegenüber, die genauso wie die Spulenwindungen 14 auf der jeweilige Leiterkarte lithographisch hergestellt sind. Für die Spule auf der Leiterkarte 110 und die sie bildenden Spulenwindungen wird der einfachen Darstellung halber im vorliegenden Text dieselbe Bezugsziffer 114 verwendet.

Der Leiterkartenbereich 10' wird von einer Ferritstruktur 24 umgeben. Man sieht, dass diese Struktur abgewinkelte Bereiche 30, 32 aufweist, die die Leiterplatte 10' durchsetzen. Dabei weist der äußere abgewinkelte Abschnitt 32 nur an den Bereichen Ausschnitte auf, durch die die Stegbereiche der Leiterkarte 10 hindurchgreifen, die den Leiterkartenbereich 10' mit der übrigen Leiterkarte verbinden.

Die Ferritstruktur 24 wirkt auf diese Weise besonders wirksam mit einer Ferritstruktur 124 an der anderen Leiterkarte 110 zusammen. Die zweite Ferritstruktur 124 umschließt dabei den Leiterkartenbereich 110' der zweiten Leiterkarte 110 in der gleichen Weise, wie die Ferritstruktur 24 den Leiterkartenbereich 10' der Leiterkarte 10. Auf die Weise wird die induktive Kopplung zwischen den sich gegenüberstehenden Spulen 14, 114 durch die Ferritstrukturen 24, 124 wirksam transformatorisch verstärkt. Außerdem wirken die Ferritstrukturen 24, 124 zusätzlich abschirmend in der Weise, dass die elektrische Kopplung der Elektroden 12, 112 zur Datenübertragung nicht oder weniger durch die induktive Kopplung zwischen den Spulen 14 und 114 gestört wird.

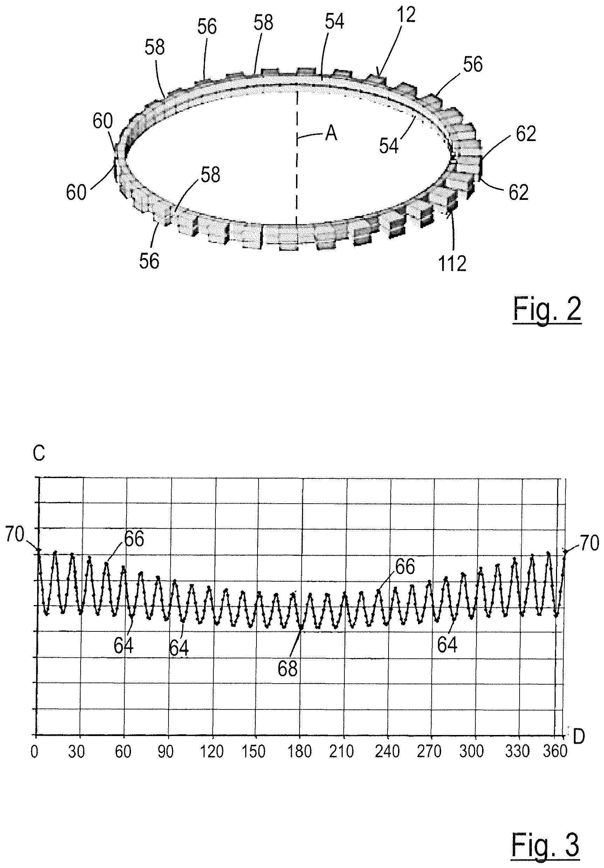

In Fig. 2 sind die erste und die zweite Elektrode 12, 112, wie sie in Fig. 1 zum Einsatz kommen, in Draufsicht gezeigt.

Die ringscheibenförmigen Elektroden 12, 112 umfassen jeweils einen ringförmigen Bereich 54 sowie eine Vielzahl von rechteckigen Zähnen 56, die von dem ringförmigen Bereich 54 nach außen abstehen. Zwischen zwei Zähnen 56 ist jeweils eine Aussparung 58 vorgesehen, die in Umfangsrichtung gesehen eine gleiche Länge wie die Zähne 56 aufweist. In einer erfindungsgemäßen Vorrichtung stehen sich zwei derartige Elektroden 12, 112 bezüglich der Achse A axial beabstandet gegenüber, wie es in den Fig. 1 und 2 erkennbar ist, wobei sich beispielsweise die erste Elektrode 12 um die Achse A dreht, wohingegen die zweite Elektrode 112 - absolut gesehen - ruht.

Bei der ersten und der zweiten Elektrode 12, 112 ändert sich in Umfangsrichtung die Größe der Zähne 56, d.h. die Entfernung über die sich die Zähne 56 von dem ringförmigen Bereich 54 weg erstrecken.

Genauer gesagt nimmt die Breite der Zähne 56 kontinuierlich von einem Minimum 60 bis zu einem Maximum 62 zu, wobei sich das Minimum 60 und das Maximum 62 bezüglich der Achse A gegenüberliegen.

Werden nun die in Fig. 2 gezeigten Elektroden um die Achse A gegeneinander verdreht, so ändert sich die Größe der elektrischen Kapazität, die von den Elektroden 12, 112 gebildet wird. Die Größe der elektrischen Kapazität ist in Fig. 3 gezeigt, wobei dort die Größe der elektrischen Kapazität als Wert "C" über einen Drehwinkel "D" von 0 bis 360° angetragen ist.

Es ist zu erkennen, dass die Größe C der elektrischen Kapazität zwischen lokalen Minima 64 und lokalen Maxima 66 schwankt. Ein lokales Minimum 64 entsteht, wenn in axialer Richtung gesehen die Zähne 56 der ersten Elektrode 12 in Deckung mit den Aussparungen 58 der zweiten Elektrode 112 sind. In entsprechender Weise entsteht ein lokales Maximum 66, wenn die Zähne 56 der ersten Elektrode 12 mit den Zähnen 56 der zweiten Elektrode 112 zur Deckung gebracht sind.

Die Größe C der elektrischen Kapazität weist ferner ein globales Minimum 68 und ein globales Maximum 70 auf, bei welchen die Größe C der elektrischen Kapazität einen absoluten Minimal- bzw. einen absoluten Maximalwert erreicht. Der absolute Minimalwert bei dem globalen Minimum 68 wird dann erreicht, wenn sich das Maximum 62 der ersten Elektrode 12 und das Maximum 62 der zweiten Elektrode 112 bezüglich der Achse A gegenüberliegen, d.h. die jeweils größten Zähne 56 maximal zueinander beabstandet sind, und jeweils ein Zahn 56 der ersten Elektrode 12 zur Deckung mit einer Aussparung 58 der zweiten Elektrode 112 gebracht ist.

Das globale Maximum wird in der in Fig. 2 gezeigten Position der Elektroden 12, 112 erreicht, d.h. wenn sowohl die Maxima 62 als auch die Zähne 56 der ersten und der zweiten Elektrode 12, 112 zur Deckung gebracht sind.

Das globale Maximum 70 kann beispielsweise als Nullpunkt definiert sein, wohingegen das globale Minimum 68 eine Winkelposition von 180° anzeigen kann.

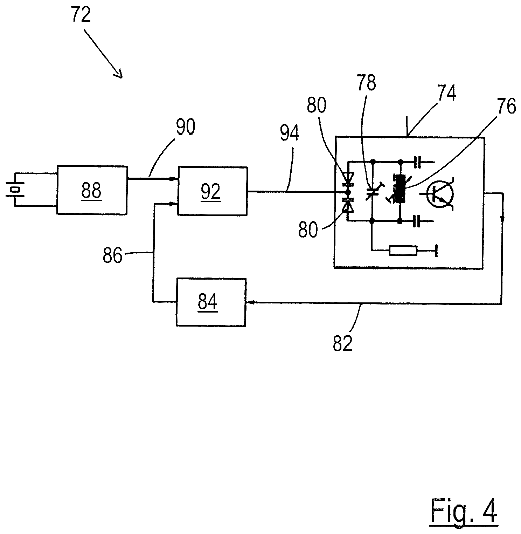

Die in Fig. 3 gezeigte schwankende Größe C der elektrischen Kapazität kann mit einer Schaltungsanordnung 72 ermittelt werden, wie sie in Fig. 4 dargestellt ist. Die Schaltungsanordnung 72 umfasst einen spannungsgesteuerten Oszillator (VCO) 74, der eine Induktivität 76 sowie eine Kapazität 78 aufweist. Die Kapazität 78 wird durch die erste Elektrode 12 und die zweite Elektrode 112 gebildet. Ferner umfasst der VCO 74 zwei Kapazitätsdioden 80, deren Kapazität durch eine Spannung veränderbar ist.

Der VCO 74 gibt eine Schwingfrequenz 82 aus, die etwa 100 MHz beträgt. Die Schwingfrequenz 82 wird einem Teiler 84 zugeleitet, der eine Teilfrequenz 86 ausgibt, deren Frequenz dem einhundertsten Teil der Schwingfrequenz 82 entspricht.

Die Schaltungsanordnung 72 umfasst ferner einen Quarzoszillator 88, der eine Referenzfrequenz 90 von 1 MHz ausgibt. Die Referenzfrequenz 90 und die Teilfrequenz 86 werden einer Phasenregelschleife (PLL) 92 zugeführt. Die PLL 92 vergleicht die Teilfrequenz 86 mit der Referenzfrequenz 90. Unterscheiden sich die Teilfrequenz 86 und die Referenzfrequenz 90, gibt die PLL 92 ein Steuersignal 94 aus, mit welchem die Kapazität der Kapazitätsdioden 80 verändert wird, um die Schwingfrequenz 82 des VCO 74 wieder auf 100 MHz zu bringen.

Anhand des Steuersignals 94 kann somit auf die momentan vorhandene Größe C bzw. eine Größenänderung der Kapazität 78 und damit auf die Winkelposition des ersten Gegenstands zu dem zweiten Gegenstand geschlossen werden.

### Bezugszeichenliste

- 10,110: Leiterkarte
- 10', 110': radial innerer Bereich der Leiterkarte
- 12, 112: erste Elektrode, zweite Elektrode
- 14, 114: Spule, Spulenwindungen
- 16, 116: isolierender Abstandshalter
- 18, 118: ringförmige metallische Schaumstoffstruktur
- 20, 120: ringförmig angeordnete metallisch ausgekleidete Bohrungen
- 22, 122: Gehäuseschale
- 24, 124: Ferritstruktur
- 26, 126: abgewinkelter Bereich der Gehäuseschale
- 30, 130: radial innerer abgewinkelter Bereich der Ferritstruktur
- 32, 132: radial äußerer abgewinkelter Abschnitt der Ferritstruktur
- 50: Antriebsmotor
- 52: Antriebswelle
- 54: ringförmiger Bereich
- 56: Zahn
- 58: Aussparung
- 60: Minimum
- 62: Maximum
- 64: lokales Minimum
- 66: lokales Maximum
- 68: globales Minimum
- 70: globales Maximum
- 72: Schaltungsanordnung
- 74: VCO
- 76: Induktivität
- 78: Kapazität
- 80: Kapazitätsdiode
- 82: Schwingfrequenz
- 84: Teiler
- 86: Teilfrequenz
- 88: Quarzoszillator
- 90: Referenzfrequenz
- 92: PLL
- 94: Steuersignal

- A: Achse der relativen Rotationsbewegung
- C: Größe der Kapazität
- D: Drehwinkel

## Patentansprüche

1. Vorrichtung zur kontaktlosen Übertragung von Daten und zur Ermittlung einer Winkeländerung zwischen zwei sich um eine gemeinsame Rotationsachse (A) relativ zueinander bewegenden Gegenständen, wobei
- an dem ersten Gegenstand ein bevorzugt scheiben- oder ringscheibenförmiger erster Elektrodenträger (10) vorgesehen ist, der eine erste Elektrode (12) umfasst,
- an dem zweiten Gegenstand ein bevorzugt scheiben- oder ringscheibenförmiger zweiter Elektrodenträger (110) vorgesehen ist, der eine zweite Elektrode (112) umfasst, wobei sich der erste und der zweite Elektrodenträger (10, 110) bezüglich der Rotationsachse (A) axial beabstandet gegenüberstehen und die erste und die zweite Elektrode (12, 112) derart angeordnet sind, dass eine Datenübertragung durch elektrische Kopplung zwischen der ersten und der zweiten Elektrode (12, 112) möglich ist, wobei die Elektrodenträger (10, 110) derart ausgebildet sind, dass sich die Stärke der elektrischen Kopplung entlang der umfangsmäßigen Erstreckung der ersten und der zweiten Elektrode (12, 112) verändert, wobei die erste Elektrode (12) und die zweite Elektrode (112) eine elektrische Kapazität (78) bilden, wobei eine Steuereinheit vorgesehen ist, die ausgebildet ist, ein Signal von der ersten Elektrode (12) an die zweite Elektrode (112) zu übertragen, welches bevorzugt Nutzdaten enthält, und eine Auswerteeinheit vorgesehen ist, die ausgebildet ist, insbesondere die Nutzdaten zu empfangen und wobei die Steuereinheit und/oder die Auswerteeinheit ausgebildet ist, eine Größe (C) der elektrischen Kapazität (78) zu bestimmen, um eine Winkeländerung zwischen dem ersten und dem zweiten Gegenstand zu ermitteln.

2. Vorrichtung nach Anspruch 1,
**dadurch gekennzeichnet, dass**
der erste Elektrodenträger (10) in Umfangsrichtung abwechselnde Abschnitte (56, 58) mit verbreiterter und anschließend verjüngter erster Elektrode (12) aufweist und der zweite Elektrodenträger (110) in Umfangsrichtung abwechselnde Abschnitte (56, 58) mit verbreiterter und anschließend verjüngter zweiter Elektrode (112) aufweist.

3. Vorrichtung nach Anspruch 2,
**dadurch gekennzeichnet, dass**
die Abschnitte (56, 58) mit verbreiterter Elektrode und mit verjüngter Elektrode in Umfangsrichtung der Elektrodenträger (10, 110) jeweils eine gleiche Länge aufweisen.

4. Vorrichtung nach Anspruch 2 oder 3,
**dadurch gekennzeichnet, dass**
der erste und/oder der zweite Elektrodenträger (10, 110) einen Nullreferenzabschnitt aufweisen, der eine verbreiterte oder eine verjüngte Elektrode (12, 112) aufweist und dessen Länge in Umfangsrichtung größer als die Länge eines Abschnitts (56) mit verbreiterter Elektrode und die Länge eines Abschnitts (58) mit verjüngter Elektrode ist.

5. Vorrichtung nach einem der Ansprüche 2 bis 4,
**dadurch gekennzeichnet, dass**
sich die Breite der Abschnitte (56) mit verbreiterter Elektrode in Umfangsrichtung zwischen einem Maximum (62) und einem Minimum (60) ändert, wobei sich das Maximum (62) und das Minimum (60) bevorzugt bezüglich der Rotationsachse (A) gegenüberliegen.

6. Vorrichtung nach Anspruch 5,
**dadurch gekennzeichnet, dass**
sich die Breite der Abschnitte (56) mit verbreiterter Elektrode in Umfangsrichtung kontinuierlich zwischen dem Maximum (62) und dem Minimum (60) ändert.

7. Vorrichtung nach zumindest einem der vorstehenden Ansprüche,
**dadurch gekennzeichnet, dass**
die elektrische Kapazität (78) Bestandteil eines Schwingkreises (74) ist.

8. Vorrichtung nach Anspruch 7,
**dadurch gekennzeichnet, dass**
der Schwingkreis einen spannungsgesteuerten Oszillator (74) umfasst.

9. Vorrichtung nach Anspruch 8,
**dadurch gekennzeichnet, dass**
der Schwingkreis mit einer Phasenregelschleife (92) gekoppelt ist, die eine Steuerspannung (94) an den spannungsgesteuerten Oszillator (74) ausgibt, wobei die Steuereinheit und/oder die Auswerteeinheit ausgebildet ist, anhand der Steuerspannung (74) die Größe (C) der elektrischen Kapazität (78) zu bestimmen.

10. Vorrichtung nach Anspruch 9,
**dadurch gekennzeichnet, dass**
die Phasenregelschleife (92) mit einer Referenzfrequenzquelle (88) gekoppelt ist, deren Frequenz bevorzugt um den Faktor 100 kleiner ist als eine Frequenz des Schwingkreises.

11. Vorrichtung nach zumindest einem der vorstehenden Ansprüche,
**dadurch gekennzeichnet, dass**
- koaxial und drehfest zu dem ersten Elektrodenträger (10) eine erste Spule (14) vorgesehen ist,
- koaxial und drehfest zu dem zweiten Elektrodenträger (110) eine zweite Spule (114) vorgesehen ist, die der ersten Spule (14) derart bezüglich der Rotationsachse (A) axial beabstandet gegenübersteht, dass eine Energieübertragung durch induktive Kopplung zwischen den zwei Spulen (14, 114) möglich ist, wobei
in einem radialen Bereich zwischen der ersten Spule (14) und der ersten Elektrode (12) und/oder zwischen der zweiten Spule (114) und der zweiten Elektrode (112) jeweils koaxial zwischen Spule (14, 114) und Elektrode (12, 112) eine Anordnung aus leitfähigem Material (18, 20; 118, 120) zur elektrischen Abschirmung vorgesehen ist.

12. Verfahren zur kontaktlosen Übertragung von Daten und zur Ermittlung einer Winkeländerung zwischen zwei sich um eine gemeinsame Rotationsachse (A) relativ zueinander bewegenden Gegenständen, wobei
- an dem ersten Gegenstand ein bevorzugt scheiben- oder ringscheibenförmiger erster Elektrodenträger (10) vorgesehen ist, der eine erste Elektrode (12) umfasst,
- an dem zweiten Gegenstand ein bevorzugt scheiben- oder ringscheibenförmiger zweiter Elektrodenträger (110) vorgesehen ist, der eine zweite Elektrode (112) umfasst, wobei sich der erste und der zweite Elektrodenträger (10, 110) bezüglich der Rotationsachse (A) axial beabstandet gegenüberstehen und die erste und die zweite Elektrode (12, 112) derart angeordnet sind, dass eine Datenübertragung durch elektrische Kopplung zwischen der ersten und der zweiten Elektrode (12, 112) möglich ist, wobei die Elektrodenträger (10, 110) derart ausgebildet sind, dass die Stärke der elektrischen Kopplung entlang der Erstreckung der ersten und der zweiten Elektrode (12, 112) schwankt, wobei die erste Elektrode (12) und die zweite Elektrode (112) eine elektrische Kapazität (78) bilden,
wobei bei dem Verfahren
- von der ersten Elektrode (12) an die zweite Elektrode (112) ein Signal übertragen wird, welches bevorzugt Nutzdaten enthält, und
- die Größe (C) der elektrischen Kapazität (78) ausgewertet wird, um eine Winkeländerung zwischen dem ersten und dem zweiten Gegenstand zu ermitteln.

13. Laserscanner mit einer Vorrichtung zur kontaktlosen Übertragung von Daten und zur Ermittlung einer Winkeländerung nach einem der Ansprüche 1 bis 11, wobei der Laserscanner einen, relativ um eine Rotationsachse drehbaren, den ersten Gegenstand bildenden Sensorkopf und eine den zweiten Gegenstand bildende Versorgungseinheit umfasst.
